# EUROPÄISCHE PATENTANMELDUNG

(11) **EP 4 600 629 A1**
(43) Veröffentlichungstag der Anmeldung: **13.08.2025**
(21) Anmeldenummer: 25154136.3
(22) Anmeldetag: 27.01.2025
(51) Int. Cl.: G01M 17/02

(54) **VERFAHREN ZUR ERMITTLUNG EINES VERSCHLEISSGRADES EINES RADES, LOGISTIKSYSTEM**

(30) Priorität: 08.02.2024 DE 102024103573
(71) Anmelder: Jungheinrich AG, 22047 Hamburg (DE)
(72) Erfinder: ROCKEL Dr., Sebastian, 22846 Norderstedt (DE); ROLINK Dr., Jérôme, 23843 Bad Oldesloe (DE); DUFFNER, Adrian, 22041 Hamburg (DE)
(74) Vertreter: Seemann & Partner Patentanwälte mbB

(57) **Zusammenfassung**

Die Erfindung betrifft ein Verfahren zur Ermittlung eines Verschleißgrades eines Rades 4 eines Intralogistik-Förderzeugs 2 sowie ein Logistiksystem 3. Ein Intralogistik-Förderzeug 2 ist dazu ausgebildet und eingerichtet, eine Drehzahl ω des Rades 4 zu messen und eine während eines Beschleunigungsvorgangs des Intralogistik-Förderzeugs 2 aufgewendete oder zurückgewonnene Energie ΔEr zu messen. Es wird ein erster Beschleunigungskennwert ΔRr durch Anwendung eines ersten Funktionszusammenhangs auf die gemessene aufgewendete oder zurückgewonnene Energie ΔEr bestimmt. Eine Drehzahländerung Δω, die durch den Beschleunigungsvorgang bedingt ist wird erfasst. Ein zweiter Beschleunigungskennwert ΔRt wird durch Anwendung eines zweiten Funktionszusammenhangs auf die Drehzahländerung Δω bestimmt. Ein Verschleißgradkennwert Wt wird durch Anwendung eines dritten Funktionszusammenhangs auf den ersten Beschleunigungskennwert ΔRr und den zweiten Beschleunigungskennwert ΔRt bestimmt. Ein Verschleißgrad des Rades 4 wird durch Vergleichen des Verschleißgradkennwertes Wt mit einem Ausgangs-Verschleißgradkennwert WO bestimmt.

## Beschreibung

Die Erfindung betrifft ein Verfahren zur Ermittlung eines Verschleißgrades eines Rades eines Intralogistik-Förderzeugs sowie ein Logistiksystem, aufweisend eine Verarbeitungseinheit und zumindest ein Intralogistik-Förderzeug mit einem Rad.

Die Räder eines Intralogistik-Förderzeugs, vor allem das Antriebsrad oder die Antriebsräder, sind ein Verschleißteil und müssen in regelmäßigen Intervallen ausgetauscht werden. Vielfach sind die Räder von Intralogistik-Förderzeugen mit einer Laufbeschichtung versehen, die gute Standzeiten aufweist und zu einem erheblichen Grad abgefahren werden kann. Je stärker das Rad abgefahren ist, desto geringer wird sein Radius. Die Räder umfassen typischerweise einen Radreifen, bei denen es sich um einen Vollgummireifen handelt. Diese bestehen aus mehreren Schichten unterschiedlicher Materialien. Auf einer Tragschicht befindet sich eine Laufbeschichtung, welche sich im Laufe des Betriebes abfährt, also dem Verschleiß unterliegt. Radreifen von Förderzeugen können bis nahe an die Tragschicht abgefahren werden. Durch den Verschleiß des Radreifens verändert sich der Radius des Rades. Aus Gründen der Vereinfachung und besseren Lesbarkeit soll im Kontext der vorliegenden Beschreibung von Radverschleiß oder Verschleißgrad eines Rades gesprochen werden, obwohl es sich um einen Verschleiß des Radreifens handelt. Ebenso soll auf den Radradius und dessen Veränderung abgestellt werden, obwohl sich die Materialstärke des Radreifens und somit der Radius des Radreifens durch Verschleiß verändert. Für die Ermittlung des Verschleißgrades eines Rades sind verschiedene technische Ansätze bekannt. Beispielsweise kann im Rahmen von Servicearbeiten eine Materialstärke des Radreifens oder der Laufbeschichtung gemessen werden. Bei einem solchen Vorgehen ist der aktuelle Verschleißzustand des Rades jedoch nicht bekannt, denn er wird erst zum Zeitpunkt der Wartung bestimmt. Um eine kontinuierliche Überwachung des Verschleißgrades zu ermöglichen, können spezielle Sensoren vorgesehen sein, mit denen der Radius des Rades gemessen wird. Aus EP 1 868 838 B1 ist beispielsweise ein Flurförderzeug bekannt, welches einen Sensor umfasst, mit dem zur Bestimmung eines aktuellen Raddurchmessers ein Abstand zu einer Oberfläche eines Antriebsrads gemessen wird. Aus DE 10 2009 010 983 A1 ist bekannt, eine Markierung in das Verschleißmaterial eines Rads eines Flurförderzeugs einzubetten und dessen elektrisches und/oder magnetisches Antwortsignal mit einem Detektor zu überwachen. Bleibt das Antwortsignal aus, zeigt dies den Verlust der Markierung und somit einen Verschleiß des Materials des Rades an, welcher bis an die eingebettete Markierung heranreicht, so dass diese nicht mehr vorhanden ist.

Es ist eine Aufgabe der Erfindung, ein Verfahren zur Ermittlung eines Verschleißgrades eines Rades eines Intralogistik-Förderzeugs sowie ein Logistiksystem anzugeben, wobei eine einfache und effiziente Bestimmung des Verschleißgrades des Rades möglich sein soll.

Die Aufgabe wird gelöst durch ein Verfahren zur Ermittlung eines Verschleißgrades eines Rades eines Intralogistik-Förderzeugs, wobei das Intralogistik-Förderzeug dazu ausgebildet und eingerichtet ist, eine Drehzahl des Rades zu messen und eine von dem Intralogistik-Förderzeug aufgewendete oder zurückgewonnene Energie zu messen, wobei das Verfahren die folgenden Schritte aufweist:
a) Erfassen einer während eines Beschleunigungsvorgangs aufgewendeten oder zurückgewonnenen gemessenen Energie,
b) Bestimmen eines ersten Beschleunigungskennwertes durch Anwenden eines vorbestimmten ersten Funktionszusammenhangs auf die bei dem Beschleunigungsvorgang gemessene aufgewendete oder zurückgewonnene Energie,
c) Erfassen einer durch den Beschleunigungsvorgang bedingten Drehzahländerung der Drehzahl des Rades,
d) Bestimmen eines zweiten Beschleunigungskennwertes durch Anwenden eines zweiten vorbestimmten Funktionszusammenhangs auf die Drehzahländerung,
e) Bestimmen eines Verschleißgradkennwertes durch Anwenden eines dritten vorbestimmten Funktionszusammenhangs auf den ersten Beschleunigungskennwert und den zweiten Beschleunigungskennwert,
f) Bestimmen eines Verschleißgrades des Rades durch Vergleichen des Verschleißgradkennwertes mit einem Ausgangs-Verschleißgradkennwert

Das Intralogistik-Förderzeug ist insbesondere ein radangetriebenes Förderzeug der Intralogistik. Das Intralogistik-Förderzeug ist insbesondere ein Flurförderzeug. Das Flurförderzeug ist ferner beispielsweise ein Gabelstapler, ein Gegengewichtsstapler, ein Schubmaststapler, ein Kommissionierer, ein Kommissionierstapler, ein Hubwagen oder auch ein Schlepper. Als Flurförderzeug wird auch ein AMR (Autonomer Mobiler Roboter) angesehen. Das Intralogistik-Förderzeug ist ferner insbesondere ein schienengeführtes Förderzeug. Ein schienengeführtes Förderzeug ist beispielsweise ein Trägerfahrzeug, wie z.B. ein UPC (engl. Under Pallet Carrier) oder auch ein Regalbediengerät, wie es für vollautomatische Kleinteilelager eingesetzt wird.

Im Kontext der vorliegenden Beschreibung ist ein Beschleunigungsvorgang ein Beschleunigungsvorgang mit positivem Vorzeichen oder ein Beschleunigungsvorgang mit negativem Vorzeichen. Ein Beschleunigungsvorgang ist also ein Fahrzustand, bei dem die kinetische Energie des Intralogistik-Förderzeugs zunimmt, beispielsweise angetrieben durch den Fahrantrieb des Intralogistik-Förderzeugs, oder ein Vorgang, bei dem die kinetische Energie des Intralogistik-Förderzeugs abnimmt, beispielsweise durch einen Bremsvorgang, bei dem Energie zurückgewonnen wird.

Der erste Beschleunigungskennwert ist über den ersten Funktionszusammenhang mit der während des Beschleunigungsvorgangs gemessenen aufgewendeten oder zurückgewonnenen Energie korreliert. Der erste Funktionszusammenhang ist insbesondere ein festgelegter und vorbestimmter Funktionszusammenhang, was bedeutet, dass der erste Funktionszusammenhang, wenn er auf einen bestimmten ersten Eingangswert angewendet wird, stets einen bestimmten ersten Ausgangswert liefert.

Während des Beschleunigungsvorgangs verändert sich die Drehzahl des Rades des Intralogistik-Förderzeugs um den Betrag der Drehzahländerung, beispielsweise weil das Intralogistik-Förderzeug positiv beschleunigt, seine kinetische Energie also zunimmt, oder einen Bremsvorgang durchführt, seine kinetische Energie also abnimmt. Die Drehzahländerung ist über den zweiten Funktionszusammenhang mit dem zweiten Beschleunigungskennwert korreliert. Auch bei dem zweiten Funktionszusammenhang handelt es sich insbesondere um einen festgelegten und vorbestimmten Funktionszusammenhang. Wie bereits im Zusammenhang mit dem ersten Funktionszusammenhang erläutert, liefert der zweite Funktionszusammenhang, wenn er auf einen bestimmten zweiten Eingangswert angewendet wird, stets einen bestimmten zweiten Ausgangswert. Ein bestimmter Wert einer Drehzahländerung führt also stets zu einem bestimmten Wert des zweiten Beschleunigungskennwertes. Die Parameter, die den ersten und zweiten Funktionszusammenhang beschreiben, werden also nicht verändert.

Der erste und der zweite Beschleunigungskennwert stehen in einem beliebig definierbaren aber auf kurzen Zeitskalen festen Verhältnis zueinander. Der erste Beschleunigungskennwert ist ein Maß dafür, wie groß die während eines Beschleunigungsvorgangs tatsächlich von dem Intralogistik-Förderzeug aufgewendete oder zurückgewonnene Energie ist, und korreliert mit einer Energiemenge, welche beispielsweise einer Traktionsbatterie entnommen oder zugeführt wird. Der zweite Beschleunigungskennwert ist ein Wert, welcher mit einer kinetischen Energie des Intralogistik-Förderzeugs korreliert. Dieser mit der kinetischen Energie korrelierte Wert wird aus der Geschwindigkeit des Intralogistik-Förderzeugs errechnet. Die Geschwindigkeit wird wiederum aus der Drehzahl und dem Radius des Rades bestimmt. Der Radius des Rades verändert sich, da das Rad dem Verschleiß unterliegt.

Es wird der mit der gemessenen aufgewendeten oder zurückgewonnenen Energie korrelierte erste Beschleunigungskennwert mit dem anhand der Drehzahländerung des Rades errechneten zweiten Beschleunigungskennwert ins Verhältnis gesetzt. Während der erste Beschleunigungskennwert vom Radverschleiß unabhängig ist, verändert sich der zweite Beschleunigungskennwert mit dem sich verändernden Radius des Rades bei gleicher Geschwindigkeit. Er wird nämlich unter der Annahme ermittelt, dass das Rad, dessen Drehzahländerung bestimmt wird, einen gewissen Radius hat. Der Radius des Rades ist jedoch verschleißabhängig und verändert sich mit der Zeit. Da der zweite und auch der dritte Funktionszusammenhang fest vorgegebene vorbestimmte Funktionszusammenhänge sind, verändert sich der Verschleißgradkennwert in dem Moment, in dem sich der Radius des Rades verändert. Die Veränderung des Radius des Rades korreliert direkt mit dessen Verschleiß, weshalb der wie beschrieben berechnete Verschleißgradkennwert ein gutes Maß für den Verschleißgrad des Rades ist. Da der aktuelle Zustand des Rades, sprich dessen Verschleißgrad, jedoch zunächst unbekannt ist, wird der Verschleißgradkennwert mit einem Ausgangs-Verschleißgradkennwert verglichen, und anhand dieses Vergleiches ein Verschleißgrad des Rades bestimmt.

Das Rad des Intralogistik-Förderzeugs dient dazu, auf einem Untergrund oder einer anderen geeigneten Führung, beispielsweise einer horizontalen oder vertikalen Schiene abzurollen. Das Rad ist insbesondere ein Antriebsrad des Intralogistik-Förderzeugs. Das Rad des Intralogistik-Förderzeugs kann ferner ein gelenktes Rad sein, insbesondere ein gelenktes Antriebsrad. Es kann sich bei dem Rad ebenso um ein Lastrad des Intralogistik-Förderzeugs, insbesondere um ein Lastrad eines Flurförderzeugs, handeln. Das Rad ist ferner insbesondere ein mit einer Laufbeschichtung beschichtetes Rad.

Mit dem Verfahren gemäß Aspekten der Erfindung kann vorteilhaft ein Verschleißgrad des Rades bestimmt werden, ohne dass zusätzliche Sensoren an oder in dem Intralogistik-Förderzeug vorgesehen werden müssen. Es können die im Intralogistik-Förderzeug ohnehin vorhandenen Sensoren und deren Messwerte genutzt werden. Die Messwerte der Sensoren werden vielfach auch für andere Fahrzeugfunktionen genutzt und sind daher ohnehin in der Fahrzeugsteuerung vorhanden. Beispielsweise ist in vielen Intralogistik-Förderzeugen eine Geschwindigkeitsmessung vorgesehen, die auf der Grundlage eines Wertes der Drehzahl des Rades arbeitet. Eine Geschwindigkeitsmessung ist in vielen Fällen für die Odometrie des Intralogistik-Förderzeugs vorhanden. Die während des Beschleunigungsvorgangs aufgewendete oder zurückgewonnene gemessene Energie kann beispielsweise aus Parametern bestimmt werden, die im Antriebssystem oder in einem Energierückgewinnungssystem des Intralogistik-Flurförderzeugs ohnehin vorhanden sind. Vorteilhaft kann auf zusätzliche Sensorik, wie beispielsweise eine zusätzliche Messvorrichtung zur Messung des Raddurchmessers, verzichtet werden. Gleichzeitig ist eine Messung des Verschleißzustands des Rades im laufenden Betrieb möglich.

Gemäß einer vorteilhaften Ausführungsform ist das Verfahren dadurch fortgebildet, dass der Ausgangs-Verschleißgradkennwert bestimmt wird, indem die oben genannten Schritte a) bis f) für eine Vielzahl von Beschleunigungsvorgängen durchgeführt werden. Der Ausgangs-Verschleißgradkennwert kann aus den für die Vielzahl von Beschleunigungsvorgängen ermittelten Verschleißgradkennwerten bestimmt werden, wobei der Ausgangs-Verschleißgradkennwert beispielsweise ein statistisches Mittel der für die Vielzahl von Beschleunigungsvorgängen ermittelten Verschleißgradkennwerte ist. Insbesondere wird die Vielzahl von Beschleunigungsvorgängen im Anschluss an einen Wechsel des Rades durchgeführt. In einem solchen Fall kann es ausreichend sein, den Verschleißgradkennwert aus lediglich einer geringen Anzahl von Beschleunigungsvorgängen, beispielsweise auch aus lediglich einem Beschleunigungsvorgang zu bestimmen. Wird das Rad ausgewechselt und durch ein neues Rad ersetzt, kann der Zustand dieses neuen Rades als Referenzpunkt für einen Verschleißgrad herangezogen werden. Alternativ ist der Ausgangs-Verschleißgradkennwert ein fester vorbestimmter Wert, der beispielsweise werkseitig festgelegt ist. Beispielsweise ist für einen bestimmten Typ Intralogistik-Förderzeug ein bestimmter Radtyp vorgesehen, für den zuvor eine entsprechende Messung zur Bestimmung eines Ausgangs-Verschleißgradkennwerts durchgeführt wurde. Dieser vorbestimmte und festgelegte Wert kann als Referenzpunkt für die Bestimmung des Verschleißgrades herangezogen werden.

Gemäß einer anderen vorteilhaften Ausführungsform ist das Verfahren ferner dadurch fortgebildet, dass die während des Beschleunigungsvorgangs des Intralogistik-Förderzeugs aufgewendete oder zurückgewonnene gemessene Energie auf der Grundlage elektrischer Kenngrößen des Intralogistik-Förderzeugs erfasst oder bestimmt wird. Geeignete elektrische Kenngrößen liegen beispielsweise im Fahrantrieb und/oder im Energierückgewinnungssystem des Intralogistik-Förderzeugs vor. Demgemäß ist insbesondere vorgesehen, dass die während des Beschleunigungsvorgangs aufgewendete oder zurückgewonnene gemessene Energie auf der Grundlage elektrischer Kenngrößen eines Fahrantriebs und/oder eines Energierückgewinnungssystems des Intralogistik-Förderzeugs erfasst oder bestimmt wird. Die elektrischen Kenngrößen sind insbesondere ein Strom und eine Spannung einer im Fahrantrieb oder im Energierückgewinnungssystem aufgewendeten oder zurückgewonnenen elektrischen Energie als gemessene Energie. Ferner insbesondere wird die während des Beschleunigungsvorgangs des Intralogistik-Förderzeugs aufgewendete oder zurückgewonnene gemessene Energie durch Integration eines Produktes aus einem zeitabhängigen Wert für den Strom und einem zeitabhängigen Wert für die Spannung über der Zeit bestimmt. Das Integrationsintervall ist insbesondere die Dauer des Beschleunigungsvorgangs.

Die aufgewendete oder zurückgewonnene gemessene Energie, die zu einer Zunahme oder Abnahme der kinetischen Energie des Intralogistik-Förderzeugs führt, kann also anhand elektrischer Kenngrö-ßen, beispielsweise der Werte für Spannung und Strom, wie sie im Fahrantrieb oder im Energierückgewinnungssystem vorliegen, bestimmt werden.

Gemäß einer weiteren vorteilhaften Ausführungsform ist das Verfahren ferner durch eines oder mehrere der folgenden Merkmale i) bis v) fortgebildet, wobei die Merkmale frei miteinander kombiniert werden können.
i) Der erste Funktionszusammenhang in Schritt b) ist ein proportionaler Funktionszusammenhang. Als Funktionszusammenhang kann eine identische Abbildung vorgesehen sein. Der erste Beschleunigungskennwert ist also beispielsweise proportional zur zurückgewonnenen Energie oder entspricht dieser.
ii) Gemäß dem zweiten Funktionszusammenhang in Schritt d) wird eine Proportionalität zwischen der Drehzahländerung und einer angenommenen aufgewendeten oder zurückgewonnenen Energie hergestellt.
iii) Der zweite Funktionszusammenhang berücksichtigt einen vorbestimmten Radius, insbesondere einen Nennradius, des Rades. Durch Anwendung des zweiten Funktionszusammenhangs auf die Drehzahländerung Δω kann als Zwischenergebnis eine angenommene Geschwindigkeitsänderung ΔV des Intralogistik-Förderzeugs berechnet werden. Dies erfolgt beispielsweise über die Formel ΔV = 2 π r Δω, wobei r ein vorbestimmter Radius, insbesondere der Nennradius, des Rades ist.

Gemäß dem zweiten Funktionszusammenhang kann ferner aus dieser angenommenen Geschwindigkeitsänderung ΔV unter Verwendung einer angenommenen Masse m des Intralogistik-Förderzeugs, beispielsweise der Leermasse des Intralogistik-Förderzeugs, eine angenommene aufgewendete oder zurückgewonnene Energie ΔEt berechnet werden. Beispielsweise kann die angenommene zurückgewonnene Energie ΔEt wie folgt berechnet werden: ΔEt = Et1 - Et2, wobei Et2 die kinetische Energie zu Beginn des Beschleunigungsvorgangs und Et1 die kinetische Energie bei Beendigung des Beschleunigungsvorgangs ist. Führt das Fahrzeug einen Bremsvorgang durch, ist die kinetische Energie Et2 zu Beginn des Beschleunigungsvorgangs größer als die kinetische Energie Et1 bei Beendigung des Beschleunigungsvorgangs. Die Energiedifferenz ΔEt ist negativ, was bedeuten, dass Energie zurückgewonnen wird. Nimmt hingegen die Geschwindigkeit des Fahrzeugs während des Beschleunigungsvorgangs zu, ist die kinetische Energie Et2 zu Beginn des Beschleunigungsvorgangs kleiner als die kinetische Energie Et1 bei Beendigung des Beschleunigungsvorgangs. Die Energiedifferenz ΔEt ist positiv, was bedeutet, dass Energie aufgewendet werden muss. Die Energiedifferenz ΔEt kann ebenso anhand der Differenzen der Drehzahländerung Δω, also der Differenz der Drehzahlen, berechnet werden. ΔEt = Et1 - Et2 = 1/2 m V1^2 - 1/2 m V2^2 = 1/2 m (2 π r ω1)^2 - 1/2 m (2 π r ω2)^2. ω2 ist die Drehzahl des Rades zu Beginn des Beschleunigungsvorgangs und ω1 ist die Drehzahl des Rades bei Beendigung des Beschleunigungsvorgangs.

Unter Verwendung des oben genannten zweiten Funktionszusammenhangs kann aus der Drehzahländerung Δω eine angenommene zurückgewonnene Energie ΔEt als ein angenommener zweiter Beschleunigungskennwert berechnet werden.

Gemäß der vorgenannten Ausführungsform erfolgt die Betrachtung des Verschleißgrades anhand einer Energiedifferenz, und zwar anhand der Energiedifferenz zwischen der gemessenen zurückgewonnenen Energie, die beispielsweise in einem Energierückgewinnungssystem des Intralogistik-Förderzeugs erfasst wird, und einer theoretisch zurückgewonnenen oder zurückgewinnbaren Energie, welche anhand einer Drehzahländerung des Rades berechnet wird.

Die Differenz zwischen der beispielsweise auf der Grundlage elektrischer Kenngrößen bestimmten gemessenen aufgewendeten oder zurückgewonnenen Energie und der theoretisch aufgewendeten oder zurückgewonnenen Energie, die anhand der Drehzahländerung bestimmt wird, ist ein Maß dafür, wie stark die Geschwindigkeitsmessung des Intralogistik-Förderzeugs, die auf der gemessenen Drehzahländerung des Rades beruht, von der tatsächlichen Geschwindigkeit des Intralogistik-Förderzeugs abweicht. Die theoretisch zurückgewinnbare Energie, bei Vernachlässigung anderer Prozesse wie Reibung, Wirkungsgrade o. ä., wäre anhand der oben genannten Formel Ekin = 1/2 m V^2 zu berechnen, wobei m die Masse des Intralogistik-Förderzeugs und V dessen tatsächliche Geschwindigkeit über Grund ist. Durch den zunehmenden Radverschleiß verringert sich jedoch der Radius des Rades. Dies führt dazu, dass die von dem Intralogistik-Förderzeug anhand der Drehzahl des Rades gemäß der Formel V = 2 π r ω berechnete Geschwindigkeit geringer ist als dessen tatsächliche Geschwindigkeit. Die Geschwindigkeitsmessung ist nämlich auf ein neues Rad mit bekanntem Radius, beispielsweise mit Nennradius, justiert.

Der Betrag der Differenz zwischen der gemessenen aufgewendeten oder zurückgewonnenen Energie und der theoretisch zurückgewonnenen Energie, die anhand der Drehzahländerung des Rades berechnet wurde, wird immer größer, je mehr der Verschleiß des Rades zunimmt, und desto kleiner sein Radius wird. Dies liegt daran, dass die tatsächliche Geschwindigkeit des Intralogistik-Förderzeugs bei gleicher Rotationsgeschwindigkeit des Rades aufgrund des geringer werdenden Radius des Rades immer weiter abnimmt.
iv) Der zweite Funktionszusammenhang in Schritt d) berücksichtigt ein während des Beschleunigungsvorgangs in einem Fahrantrieb des Intralogistik-Förderzeugs anliegendes Drehmoment. Insbesondere wird eine angenommene aufgewendete oder zurückgewonnene Energie ΔEt (als zweiter Beschleunigungskennwert ΔRt) durch Integration eines Produktes aus einem zeitabhängigen Wert des Drehmoments und einem zeitabhängigen Wert der Drehzahl ω über die Dauer des Beschleunigungsvorgangs bestimmt.
v) Gemäß dem dritten Funktionszusammenhang in Schritt d) wird ein Quotient aus dem ersten Beschleunigungskennwert und dem zweiten Beschleunigungskennwert berechnet oder es wird eine Differenz zwischen dem zweiten Beschleunigungskennwert und dem ersten Beschleunigungskennwert berechnet. Der dritte Funktionszusammenhang beinhaltet also eine Quotientenbildung oder eine Differenzbildung. Es kann ebenso ein beliebiger anderer Funktionszusammenhang vorgesehen sein, solange dieser ein Maß für einen Unterschied zwischen dem ersten Beschleunigungskennwert und dem zweiten Beschleunigungskennwert angibt.

Auch bei dem dritten Funktionszusammenhang handelt es sich um einen festgelegten und vorbestimmten Funktionszusammenhang, was bedeutet, dass der dritte Funktionszusammenhang, wenn er auf einen bestimmten ersten Eingangswert angewendet wird, stets einen bestimmten zweiten Ausgangswert liefert.

Der erste bis dritte Funktionszusammenhang sind also jeweils festgelegte und vorbestimmte Funktionszusammenhänge. In den durchgeführten Berechnungen ist der Radius des Rades des Intralogistik-Förderzeug die einzige Größe, die sich mit der Zeit ändert. So ist es möglich unter Verwendung des ersten bis dritten Funktionszusammenhangs aus der bei einem Beschleunigungsvorgang erfassten aufgewendeten oder zurückgewonnenen gemessenen Energie und einer Drehzahländerung, die durch den Beschleunigungsvorgang bedingt ist, den Verschleißgrad des Rades zu bestimmen.

Es kann zur Erfassung der aufgewendeten oder zurückgewonnenen gemessenen Energie ΔEr und zum Erfassen einer durch den Beschleunigungsvorgang bedingten Drehzahländerung Δω der Drehzahl ω des Rades das folgende Signalpaar eingesetzt werden. Erstens die Rad-Drehzahl ω des Rades, aus der die Geschwindigkeit und damit eine angenommene kinetische Energie des Intralogistik-Förderzeugs bestimmt werden kann und zweitens ein Motor-Drehmoment und die zugehörige Motordrehzahl, um die aufgewendete oder zurückgewonnene Energie zu bestimmen. Diese Paare können, müssen jedoch nicht, am gleichen Rad gemessen werden. Beispielsweise kann ein gelenktes Antriebsrad für die Messung der Drehzahl genutzt werden. Da dieses Rad ebenfalls angetrieben wird, ist es auch direkt (ggf über ein Getriebe) mit einem Fahrantriebs-Motor gekoppelt. In diesem kann das Motor-Drehmoment und die zugehörige Motordrehzahl bestimmt werden. Beide Signale werden also an einem Rad gemessen. Es ist ebenso möglich, die Messung der Raddrehzahl (und damit der Geschwindigkeit) an einem nicht angetriebenen Rad durchzuführen. In einem solchen Fall werden die beiden Signale an unterschiedlichen Rädern erfasst.

Ferner ist gemäß einer Ausführungsform vorgesehen, dass eine Masse des Intralogistik-Förderzeugs bestimmt, gemessen oder abgeschätzt wird und die Masse bei der Bestimmung des Verschleißgrades berücksichtigt wird. Beispielsweise kann die Masse des Intralogistik-Förderzeugs in den oben skizzierten Berechnungen berücksichtigt werden. Die Masse des Intralogistik-Förderzeugs kann bestimmt oder zumindest abgeschätzt werden, indem eine Masse der auf dem Lastaufnahmemittel transportierten Last bestimmt wird. Zu diesem Zweck verfügt das Intralogistik-Förderzeug beispielsweise über entsprechende Messvorrichtungen. Die Masse des Intralogistik-Förderzeugs ergibt sich als Summe der Leermasse und der Masse der auf dem Lastaufnahmemittel transportierten Last zzgl. einer ggf. anzunehmenden mittleren Masse einer Bedienperson.

Ferner ist insbesondere vorgesehen, dass die Schritte a) bis f) für eine Vielzahl von zeitlich nacheinander stattfindenden Beschleunigungsvorgängen durchgeführt werden und so ein zeitlicher Verlauf des Verschleißgradkennwerts bestimmt wird.

Es kann mit anderen Worten ein zeitabhängiger Verschleißgradkennwert bestimmt werden. Durch Vergleich mit dem Ausgangs-Verschleißgradkennwert kann ein zeitabhängiger Verschleißgradkennwert angegeben werden. In diesem Zusammenhang kann insbesondere vorgesehen sein, dass der Verschleißgradkennwert für Zeitpunkte, die in einem ersten Zeitintervall liegen mit statistischen Mitteln verarbeitet wird, beispielsweise gemittelt wird. Beispielsweise kann vorgesehen sein, dass die innerhalb einer Stunde oder innerhalb eines Tages berechnete Verschleißgradkennwerte gemittelt werden. Diese Mittelung ist durch die Annahme motiviert, dass sich innerhalb dieses Zeitintervalls der Verschleißgrad des Rades nicht wesentlich verändert. Durch die Mittelung können Messfehler oder sonstige Einflüsse wie die Fahrbahnneigung kompensiert werden. Die zeitabhängige Betrachtung erfolgt auf einer anderen Zeitskala, also in einem zweiten Zeitintervall, welches wesentlich größer als das erste Zeitintervall ist, beispielsweise über Wochen oder Monate. Auf dieser zweiten Zeitskala lässt sich eine Veränderung des Verschleißgradkennwertes des Rades beobachten.

Gemäß einer weiteren Ausführungsform ist vorgesehen, dass eine Wartungsmitteilung ausgegeben wird, wenn der Verschleißgradkennwert einen vorbestimmten Grenzwert überschreitet.

Die Wartungsmitteilung kann insbesondere an eine dritte Einheit außerhalb einer Logistikeinrichtung, in der das Intralogistik-Förderzeug betrieben wird, übertragen werden. Beispielsweise erfolgt eine Übermittlung der Wartungsmitteilung an einen externen Server oder an einen Cloudservice, beispielsweise an einen Server oder Cloudservice eines Herstellers des Intralogistik-Förderzeugs, eines Servicedienstleisters oder eines Betreibers der Logistikeinrichtung.

Erreicht der Verschleißgradkennwert einen vorbestimmten Grenzwert, kann der Nutzer oder auch der Betreiber des Intralogistik-Förderzeugs darüber informiert werden. Es kann eine vorausschauende Wartung, beispielsweise der Austausch des Rades, geplant oder veranlasst werden. Bei dem Rad des Intralogistik-Förderzeugs handelt es sich um ein sicherheitskritisches Bauteil. Durch vorausschauende Wartung (Predictive Maintenance) kann die Sicherheit des Intralogistik-Förderzeugs verbessert werden. Die vorausschauende Wartung ist einer Wartung nach festen Wartungszyklen überlegen. So kann bei intensiver Nutzung die Verschleißgrenze bereits vor Ablauf eines festgelegten Wartungsintervalls erreicht sein. Bei geringer Nutzung wird bei festgelegten Wartungsintervallen hingegen ein Rad ausgetauscht, welches noch eine nennenswerte Restlebensdauer gehabt hätte.

Ferner kann ein Tausch des Rades des Intralogistik-Förderzeugs in eine beispielsweise ohnehin geplante oder vorgesehene Wartung integriert werden, so dass unnötige Wartungseinsätze und Ausfallzeiten des Intralogistik-Förderzeugs minimiert werden. Durch proaktive Kundenansprache oder einen entsprechenden Wartungshinweis an den Kunden kann außerdem eine wertvolle Zusatzdienstleistung erbracht werden.

Gemäß einer weiteren vorteilhaften Ausführungsform ist ferner vorgesehen, dass der Beschleunigungsvorgang ein Vorgang mit negativer Beschleunigung ist und insbesondere mit einem Bremsvorgang zeitlich überlappt oder dem Bremsvorgang, insbesondere zeitlich, entspricht. Alternativ kann der Beschleunigungsvorgang ein Vorgang mit positiver Beschleunigung sein und insbesondere mit einem Geschwindigkeitszunahmevorgang zeitlich überlappen oder dem Geschwindigkeitszunahmevorgang, insbesondere zeitlich, entsprechen. Ferner ist insbesondere vorgesehen, dass ausschließlich Beschleunigungsvorgänge bei der Bestimmung des Verschleißgrades berücksichtigt werden, bei denen die Beschleunigung oberhalb eines vorbestimmten Grenzwertes liegt und/oder ausschließlich Bremsvorgänge bei der Bestimmung des Verschleißgrades berücksichtigt werden, die zum Stillstand des Intralogistik-Förderzeugs führen. Alternativ können ausschließlich Geschwindigkeitszunahmevorgänge bei der Bestimmung des Verschleißgrades berücksichtigt werden, die zu einer Fahrt des Intralogistik-Förderzeugs mit einer bekannten, insbesondere vorgegebenen oder vorgebbaren, Endgeschwindigkeit führen. Wird der Bremsvorgang bis zum Stillstand durchgeführt, so kann als Drehzahländerung Δω die Drehzahl ω zu Beginn des Bremsvorgangs herangezogen werden. Ähnlich verhält es sich bei einem Geschwindigkeitszunahmevorgang, der bis zu einer vorgegebenen oder vorgebbaren Endgeschwindigkeit durchgeführt wird. In diesem Fall kann als Enddrehzahl ω, die für die Bestimmung des Drehzahländerung Δω herangezogen wird, die vorgesehene Enddrehzahl ω angesetzt werden, die bei Beendigung des Geschwindigkeitszunahmevorgangs erreicht werden soll.

Ferner ist gemäß einer weiteren vorteilhaften Ausführungsform vorgesehen, dass eine Leerfahrt des Intralogistik-Förderzeugs erkannt und der Beschleunigungsvorgang während einer Leerfahrt durchgeführt wird oder nur solche Beschleunigungsvorgänge bei der Bestimmung des Verschleißgrades berücksichtigt werden, die bei Leerfahrt stattfinden. Die Erkennung der Leerfahrt kann beispielsweise erfolgen, indem eine Masse der transportierten Last erfasst oder gemessen wird. Ist die Masse der transportierten Last identisch Null oder liegt unterhalb eines vorgegebenen Grenzwertes, kann von einer Leerfahrt ausgegangen werden. In einem solchen Fall kann als Masse des Intralogistik-Förderzeugs die Leermasse des Intralogistik-Förderzeugs herangezogen werden ggf. ergänzt um eine durchschnittliche Masse für den Fahrer.

Die Aufgabe wird ferner gelöst durch ein Logistiksystem, aufweisend eine Verarbeitungseinheit und zumindest ein Intralogistik-Förderzeug mit einem Rad, wobei das Intralogistik-Förderzeug dazu ausgebildet und eingerichtet ist, eine Drehzahl des Rades zu messen und eine aufgewendete oder zurückgewonnene Energie zu messen, wobei die Verarbeitungseinheit dazu ausgebildet und eingerichtet ist:
a) eine während eines Beschleunigungsvorgangs des Intralogistik-Förderzeugs aufgewendete oder zurückgewonnene gemessene Energie zu erfassen,
b) einen ersten Beschleunigungskennwert durch Anwendung eines vorbestimmten ersten Funktionszusammenhangs auf die bei dem Beschleunigungsvorgang gemessene aufgewendete oder zurückgewonnene Energie zu bestimmen,
c) eine durch den Beschleunigungsvorgang bedingt Drehzahländerung der Drehzahl des Rades zu erfassen,
d) einen zweiten Beschleunigungskennwert durch Anwendung eines zweiten vorbestimmten Funktionszusammenhangs auf die Drehzahländerung zu bestimmen,
e) einen Verschleißgradkennwert durch Anwendung eines dritten vorbestimmten Funktionszusammenhangs auf den ersten Beschleunigungskennwert und den zweiten Beschleunigungskennwert zu bestimmen,
f) einen Verschleißgrad des Rades durch Vergleichen des Verschleißgradkennwertes mit einem Ausgangs-Verschleißgradkennwert zu bestimmen.

Auf das Logistiksystem treffen gleiche oder ähnliche Vorteile zu, wie sie bereits im Hinblick auf das Verfahren zur Ermittlung eines Verschleißgrades eines Rades eines Intralogistik-Förderzeugs zuvor erwähnt wurden, sodass auf Wiederholungen verzichtet werden soll.

Die Verarbeitungseinheit ist beispielsweise im Intralogistik-Förderzeug angeordnet. Ebenso kann jedoch vorgesehen sein, dass die Verarbeitungseinheit ein Steuerrechner einer Logistikeinrichtung ist, wobei in der Logistikeinrichtung das logistische System gemäß Aspekten der Erfindung implementiert ist. Gemäß einer solchen Ausführungsform erfolgt die Messwertaufnahme im Intralogistik-Förderzeug. Die Messwerte werden anschließend, beispielsweise über eine Telematikbox, an den Steuerrechner übertragen, welcher die eigentliche Auswertung vornimmt. Die Verarbeitungseinheit kann ebenso in einen beliebigen dritten Rechner oder einen Cloudservice integriert sein, der sich innerhalb oder außerhalb der Logistikeinrichtung befindet.

Gemäß einer Ausführungsform ist das Logistiksystem dadurch fortgebildet, dass die Verarbeitungseinheit dazu ausgebildet und eingerichtet ist, die während des Beschleunigungsvorgangs des Intralogistik-Förderzeugs aufgewendete oder zurückgewonnene gemessene Energie auf der Grundlage elektrischer Kenngrößen des Intralogistik-Förderzeugs zu erfassen, insbesondere auf der Grundlage elektrischer Kenngrößen eines Fahrantriebs und/oder eines Energierückgewinnungssystems des Intralogistik-Förderzeugs, wobei die elektrischen Kenngrößen ferner insbesondere ein Strom und eine Spannung einer im Fahrantrieb und/oder im Energierückgewinnungssystem aufgewendeten oder zurückgewonnenen elektrischen Energie als gemessene Energie sind, wobei ferner insbesondere die Verarbeitungseinheit dazu ausgebildet und eingerichtet ist, die während des Beschleunigungsvorgangs des Intralogistik-Förderzeugs aufgewendete oder zurückgewonnene gemessene Energie durch Integration eines Produktes aus einem zeitabhängigen Wert für den Strom und einem zeitabhängigen Wert für die Spannung über die Dauer des Beschleunigungsvorgangs zu bestimmen. Vorteilhaft kann gemäß dieser Ausführungsform auf zusätzliche Sensoren zur Erfassung der Energie in dem Intralogistik-Förderzeug verzichtet werden.

Gemäß einer Ausführungsform ist das Logistiksystem dadurch fortgebildet, dass die Verarbeitungseinheit dazu eingerichtet ist, den Ausgangs-Verschleißgradkennwert zu bestimmen, indem die Schritte
a) bis f) für eine Vielzahl von Beschleunigungsvorgängen durchgeführt werden. Die Verarbeitungseinheit ist ferner dazu eingerichtet, den Ausgangs-Verschleißgradkennwert aus den für die Vielzahl von Beschleunigungsvorgängen ermittelten Verschleißgradkennwerten zu bestimmen, wobei der Ausgangs-Verschleißgradkennwert insbesondere als ein statistisches Mittel der für die Vielzahl von Beschleunigungsvorgängen ermittelten Verschleißgradkennwerte ermittelt wird. Die Vielzahl von Beschleunigungsvorgängen kann insbesondere im Anschluss an einen Wechsel des Rades durchgeführt werden. Alternativ ist in der Verarbeitungseinheit der Ausgangs-Verschleißgradkennwert als ein fester vorbestimmter Wert hinterlegt. Der hinterlegte Wert wurde beispielsweise werkseitig für den für das Intralogistik-Förderzeug vorgesehenen Radtyp ermittelt.

Gemäß einer weiteren vorteilhaften Ausführungsform ist das Logistiksystem ferner durch eines oder mehrere der folgenden Merkmale fortgebildet, wobei die Merkmale i) bis v) beliebig miteinander kombiniert werden können.
i) Der in der Verarbeitungseinheit hinterlegte erste Funktionszusammenhang gemäß Merkmal b) ist ein proportionaler Funktionszusammenhang,
   und/oder
ii) der in der Verarbeitungseinheit hinterlegte zweite Funktionszusammenhang gemäß Merkmal d) eine Proportionalität zwischen der Drehzahländerung und einer angenommenen zurückgewonnenen Energie als zweiten Beschleunigungskennwert herstellt,
   und/oder
iii) der in der Verarbeitungseinheit hinterlegte zweite Funktionszusammenhang gemäß Merkmal d) einen vorbestimmten Radius, insbesondere einen Nennradius, des Rades berücksichtigt, und ferner insbesondere die Verarbeitungseinheit dazu ausgebildet und eingerichtet ist, durch Anwendung des zweiten Funktionszusammenhangs auf die Drehzahländerung als Zwischenergebnis eine angenommene Geschwindigkeitsänderung des Intralogistik-Förderzeugs zu berechnen, insbesondere unter Verwendung des Nennradius des Rades, und wobei die Verarbeitungseinheit dazu ausgebildet und eingerichtet ist, ferner aus der angenommenen Geschwindigkeitsänderung unter Verwendung einer angenommenen Masse des Intralogistik-Förderzeugs die angenommene aufgewendete oder zurückgewonnene Energie zu berechnen, wobei ferner insbesondere die angenommene Masse des Intralogistik-Förderzeugs die Leermasse des Intralogistik-Förderzeugs ist,
   und/oder
iv) der in der Verarbeitungseinheit hinterlegte zweite Funktionszusammenhang ferner ein während des Beschleunigungsvorgangs in einem Fahrantrieb des Intralogistik-Förderzeugs anliegendes Drehmoment berücksichtigt, wobei insbesondere die Verarbeitungseinheit dazu ausgebildet und eingerichtet ist eine angenommene aufgewendete oder zurückgewonnene Energie als zweiten Beschleunigungskennwert durch Integration eines Produktes aus einem zeitabhängigen Wert des Drehmoments und einem zeitabhängigen Wert der Drehzahl über die Dauer des Beschleunigungsvorgangs zu bestimmen,
   und/oder
v) gemäß dem der in der Verarbeitungseinheit hinterlegten dritten Funktionszusammenhang die Verarbeitungseinheit dazu ausgebildet und eingerichtet ist, einen Quotienten aus dem ersten Beschleunigungskennwert und dem zweiten Beschleunigungskennwert zu berechnen oder eine Differenz zwischen dem zweiten Beschleunigungskennwert und dem ersten Beschleunigungskennwert zu berechnen.

Weitere Merkmale im Hinblick auf den ersten bis dritten Funktionszusammenhang sind im Zusammenhang mit dem Verfahren gemäß Aspekten der Erfindung erläutert, entsprechende Funktionszusammenhänge können in der Verarbeitungseinheit implementiert bzw. hinterlegt sein.

Gemäß einer weiteren Ausführungsform ist das Logistiksystem ferner dadurch fortgebildet, dass die Verarbeitungseinheit dazu ausgebildet und eingerichtet ist, die Merkmale a) bis f) für eine Vielzahl von zeitlich nacheinander stattfindenden Beschleunigungsvorgängen durchzuführen und so einen zeitlichen Verlauf des Verschleißgradkennwerts zu bestimmen.

Insbesondere ist ferner vorgesehen, dass die Verarbeitungseinheit dazu ausgebildet und eingerichtet ist, eine Wartungsmitteilung auszugeben, wenn der Verschleißgradkennwert einen vorbestimmten Grenzwert überschreitet. Bei einem verteilten System, bei dem die Verarbeitungseinheit beispielsweise in einem Steuerrechner einer Logistikeinrichtung implementiert ist, kann ferner vorgesehen sein, dass die Wartungsmitteilung von dem Steuerrechner an das Intralogistik-Förderzeug übertragen wird.

Gemäß einer weiteren vorteilhaften Ausführungsform ist das Logistiksystem dadurch fortgebildet, dass die Verarbeitungseinheit dazu ausgebildet und eingerichtet ist, Beschleunigungsvorgänge mit negativer Beschleunigung und Beschleunigungsvorgänge mit positiver Beschleunigung zu berücksichtigen, wobei die Beschleunigungsvorgänge mit negativer Beschleunigung mit einem Bremsvorgang zeitlich überlappen oder dem Bremsvorgang entsprechen, oder wobei die Beschleunigungsvorgänge mit positiver Beschleunigung mit einem Geschwindigkeitszunahmevorgang zeitlich überlappen oder dem Geschwindigkeitszunahmevorgang entsprechen, wobei die Verarbeitungseinheit insbesondere dazu ausgebildet und eingerichtet ist, ausschließlich Beschleunigungsvorgänge bei der Bestimmung des Verschleißgrades zu berücksichtigen, bei denen die Beschleunigung oberhalb eines vorbestimmten Grenzwertes liegt und/oder ausschließlich Bremsvorgänge bei der Bestimmung des Verschleißgrades zu berücksichtigen, die zum Stillstand des Intralogistik-Förderzeugs führen oder ausschließlich Geschwindigkeitszunahmevorgänge bei der Bestimmung des Verschleißgrades zu berücksichtigen, die zu einer Fahrt des Intralogistik-Förderzeugs mit einer bekannten, insbesondere vorgegebenen oder vorgebbaren, Endgeschwindigkeit führen.

Ferner ist insbesondere vorgesehen, dass die Verarbeitungseinheit, insbesondere als ein Teil der Fahrzeugsteuerung, in dem Intralogistik-Förderzeug vorhanden ist, oder die Verarbeitungseinheit außerhalb des Intralogistik-Förderzeugs, insbesondere in einem Steuerrechner einer Logistikeinrichtung, in der das logistische System implementiert ist, vorhanden ist wobei das Intralogistik-Förderzeug eine Kommunikationsvorrichtung aufweist, welche dazu ausgebildet und eingerichtet ist, Daten betreffend die Drehzahl des Rades und Daten betreffend die während des Beschleunigungsvorgangs aufgewendete oder zurückgewonnene gemessene Energie an die Verarbeitungseinheit zu übermitteln.

Gemäß einer weiteren Ausführungsform ist ferner vorgesehen, dass das Intralogistik-Förderzeug ferner einen elektrischen Fahrantrieb und eine Traktionsbatterie umfasst, wobei die Traktionsbatterie einen elektrischen Fahrantrieb versorgt und wobei das Energierückgewinnungssystem dazu ausgebildet und eingerichtet ist, mit zumindest einem Teil der zurückgewonnenen Energie die Traktionsbatterie zu laden.

Gemäß einer Ausführungsform ist alternativ vorgesehen, dass das Intralogistik-Förderzeug ferner einen elektrischen Fahrantrieb umfasst, der von einem Versorgungssystem, insbesondere einem netzgespeisten Versorgungsystem oder einem von einer Batterie gespeisten Versorgungssystem, mit elektrischer Energie versorgt wird oder versorgbar ist, wobei das Energierückgewinnungssystem dazu ausgebildet und eingerichtet ist, zumindest einen Teil der zurückgewonnenen Energie in das Versorgungsystem zurückzuführen oder zurück einzuspeisen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: ein Intralogistik-Förderzeug in schematischer Darstellung, und
- Fig. 2: eine vereinfachte Grafik, welche den Zusammenhang zwischen einer zweiten zurückgewonnenen Energie (aufgetragen auf der Abszisse) und der tatsächlich zurückgewonnenen Energie (abgetragen auf der Ordinate) zeigt, jeweils für verschiedene Verschleißzustände des Rades.

In den Zeichnungen sind jeweils gleiche oder gleichartige Elemente und/oder Teile mit denselben Bezugsziffern versehen, so dass von einer erneuten Vorstellung jeweils abgesehen wird.

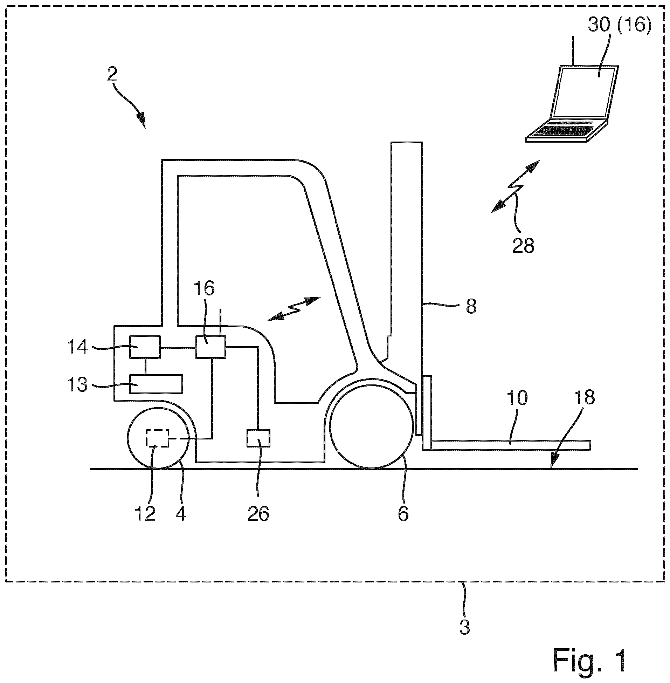

Fig. 1 zeigt in schematisch vereinfachter Darstellung ein Flurförderzeug 2 als beispielhaftes Intralogistik-Förderzeug. Das Flurförderzeug 2 weist ein Rad 4 auf, bei dem es sich beispielhaft um ein angetriebenes und gelenktes Hinterrad handelt. Das Flurförderzeug 2 umfasst ferner vordere Lasträder 6, die ebenfalls oder alternativ zu dem Rad 4 angetrieben sein können. Ferner umfasst das Flurförderzeug 2 ein Hubgerüst 8 an dem verfahrbar ein Lastaufnahmemittel 10, beispielsweise eine Lastgabel, angebracht ist. Das Flurförderzeug 2 umfasst ferner eine Messvorrichtung 12, die ausgebildet und eingerichtet ist, eine Drehzahl ω des Rades 4 zu messen. Auf die Messvorrichtung 12 kann verzichtet werden, wenn die Drehzahl ω des Rades 4 bereits bekannt ist, beispielweise ihr Wert bereits in einer Fahrzeugsteuerung vorliegt. Das Flurförderzeug 2 ist ein elektrisch angetriebenes Fahrzeug, dessen Antriebsenergie einer Traktionsbatterie 13 entnommen und einem nicht dargestellten Fahrantrieb zugeführt wird, der wiederum das Rad 4 antreibt. Der Fahrantrieb umfasst beispielsweise einen elektrischen Antriebsmotor, der über ein Getriebe mit dem angetriebenen Rad 4 gekoppelt ist. Das Flurförderzeug 2 ist ferner mit einem Energierückgewinnungssystem 14 ausgestattet, welches ausgebildet und eingerichtet ist, kinetische Energie des Flurförderzeugs 2 zu rekuperieren, also zurückzugewinnen.

Die Energierückgewinnung erfolgt während eines Bremsvorgangs. Energie kann in verschiedenen Fahrzuständen zurückgewonnen werden. Beim sog. One-Pedal-Driving erfolgt eine aktive Bremsung über das Fahrpedal. Ein durchgedrücktes Pedal führt zu einer Beschleunigung, nimmt der Fahrer das Fahrpedal jedoch zurück, wird eine sog. Nutzbremsung eingeleitet. In diesem Zustand wird Energie über das Energierückgewinnungssystem zurückgewonnen. Das Flurförderzeug 2 verzögert vielfach nur in geringem Umfang, wobei die beispielsweise mechanische Nutzbremse in diesem Fahrzustand noch nicht aktiviert ist. Je weniger Druck auf das Pedal ausgeübt wird desto stärker greift das Energierückgewinnungssystem in den Fahrzustand des Flurförderzeugs 2 ein. Der Übergang zu einem mechanischen Bremsvorgang ist in diesem Zusammenhang fließend. Ab einem bestimmten gewünschten Verzögerungswert, der allein durch das Energierückgewinnungssystem nicht mehr dargestellt werden kann, wird zusätzlich die mechanische Bremse des Flurförderzeugs 2 zugeschaltet. Der Betrieb des Flurförderzeugs 2 ist nicht auf das One-Pedal-Driving beschränkt, er kann ebenso einer klassischen zwei Pedalbedienung realisiert werden. Abhängig von der gewünschten Bremskraft wird die Verzögerung zunächst über das Energierückgewinnungssystem bereitgestellt, ist eine höhere Verzögerung gewünscht, kann zusätzlich eine Bremse zugeschaltet werden, beispielsweise eine mechanische Bremse. Entscheidend für die folgenden Betrachtungen sind stets Bremsvorgänge, bei denen kinetische Energie zurückgewonnen wird. Erfolgt eine Abbremsung des Flurförderzeugs 2 über eine beispielsweise mechanische Bremse, wird die kinetische Energie des Flurförderzeugs 2 in der Bremse in Wärmeenergie umgewandelt, und ist für die folgenden Betrachtungen nicht relevant. Der Fahrantrieb des Flurförderzeugs 2 ist ferner derart ausgebildet und eingerichtet, dass die Energie, welche dazu aufgewendet wird, eine Geschwindigkeit des Flurförderzeugs 2 zu erhöhen, ebenfalls erfasst werden kann.

Das Flurförderzeug 2 ist mit anderen Worten dazu ausgebildet und eingerichtet, über das Energierückgewinnungssystem 14 zurückgewonnene Energie zu messen und über den Fahrantrieb die zur Erhöhung der Geschwindigkeit des Flurförderzeugs 2 aufgewendete Energie zu messen. Auf diese Weise können sowohl Beschleunigungsvorgänge mit positivem Vorzeichen (Zunahme der kinetischen Energie des Flurförderzeugs 2) als auch Beschleunigungsvorgänge mit negativem Vorzeichen (Verringerung der kinetischen Energie des Flurförderzeugs 2) gemessen werden.

Das Flurförderzeug 2 ist Teil eines Logistiksystems 3. Das Logistiksystem 3 ist beispielsweise in einer in Figur 1 nicht dargestellten Logistikeinrichtung implementiert. Ferner kann das Logistiksystem 3 mehrere Flurförderzeuge 2 umfassen. Es ist ebenfalls vorgesehen, dass das Logistiksystem 3 weitere Intralogistik-Förderzeuge umfasst, bei denen es sich nicht um Flurförderzeuge 2 handelt. Beispielsweise sind in dem Logistiksystem 3 Gabelstapler, Gegengewichtsstapler, Schubmaststapler, Kommissionierer, Kommissionierstapler, Hubwagen oder Schlepper vorhanden. Ebenso können in dem Logistiksystem 3 AMRs (Autonomer Mobiler Roboter) oder radangetriebene schienengeführte Förderzeuge oder Trägerfahrzeuge, beispielsweise UPC (Under Pallet Carrier) oder Regalbediengeräte als Intralogistik-Förderzeuge vorgesehen sein. Lediglich beispielhaft wird auf ein Logistiksystem 3 Bezug genommen, in dem ein Flurförderzeug 2 als Intralogistik-Förderzeug vorhanden ist.

Das Flurförderzeug 2 umfasst eine Verarbeitungseinheit 16, die dazu ausgebildet und eingerichtet ist, eine während eines Beschleunigungsvorgangs aufgewendete oder zurückgewonnene gemessene Energie ΔEr zu erfassen. Ferner umfasst das Flurförderzeug 2 eine Messvorrichtung 12, mit der eine Drehzahl ω des Rades 4 gemessen werden kann. Die Verarbeitungseinheit 16 ist dazu eingerichtet, während eines Beschleunigungsvorgangs nicht nur die von dem Energierückgewinnungssystem zurückgewonnene oder vom Fahrantrieb aufgewendete gemessene Energie ΔEr, sondern auch die durch den Beschleunigungsvorgang bedingte Drehzahländerung Δω der Drehzahl ω des Rades 4 zu erfassen.

Die Verarbeitungseinheit 16 kann, so wie in der Figur dargestellt, in dem Flurförderzeug 2 angeordnet sein. Es kann ebenso vorgesehen sein, dass die Verarbeitungseinheit 16 in einem beispielhaft dargestellten Steuerrechner 30 des Logistiksystems 3 implementiert ist. Die Verarbeitungseinheit 16 kann ebenso in einem beliebigen dritten Rechner, der sich innerhalb oder außerhalb der Logistikeinrichtung befindet oder auch einem Cloudservice, implementiert sein. Findet die Verarbeitung in einer externen Verarbeitungseinheit 16, beispielsweise in dem Steuerrechner 30 des Logistiksystems 3 statt, so stellt die Verarbeitungseinheit 16 des Flurförderzeugs 2 beispielsweise eine drahtlose Datenverbindung 28 zu dem Steuerrechner 30 her und überträgt die erfassten Daten zur Auswertung an den Steuerrechner 30. Zu diesem Zweck umfasst das Flurförderzeug 2 beispielsweise eine Telematikbox.

Das Rad 4 ist ein sicherheitsrelevantes Verschleißteil des Flurförderzeugs 2. Es besteht ein Interesse, den Verschleißgrad des Rades 4 zu bestimmen. Gemäß einem Verfahren zur Ermittlung eines Verschleißgrades des Rades 4 werden Beschleunigungsvorgänge ausgewertet. Es kann vorgesehen sein, dass lediglich Beschleunigungsvorgänge ausgewertet werden, die während einer Leerfahrt des Intralogistik-Förderzeugs 2 stattfinden. Zu diesem Zweck wird beispielsweise eine Leerfahrt-Erkennung durchgeführt. Beispielsweise kann das Flurförderzeug 2 dazu ausgebildet und eingerichtet sein, eine Masse einer auf dem Lastaufnahmemittel 10 aufgenommenen Last zu bestimmen. Wird festgestellt, dass der Wert der aufgenommenen Masse identisch Null ist oder unterhalb eines vorgegebenen Grenzwertes liegt, kann davon ausgegangen werden, dass es sich um eine Leerfahrt handelt. In diesem Fall kann als Masse m des Flurförderzeugs 2 dessen Leermasse, ggf. zuzüglich einer mittleren Masse eines Fahrers, angenommen werden. Ferner kann vorgesehen sein, dass lediglich Bremsvorgänge ausgewertet werden, bei deren Beendigung sich das Flurförderzeug 2 in Ruhe befindet, also Bremsvorgänge bis zum Stillstand des Flurförderzeugs 2.

Beispielhaft soll im Folgenden ein Beschleunigungsvorgang mit negativer Beschleunigung, also ein Bremsvorgang, betrachtet werden, bei dem das Flurförderzeug 2 von einer Anfangsgeschwindigkeit V2 auf eine Endgeschwindigkeit V1 verzögert wird. Dieses Beispiel ist ohne weiteres auf einen Bremsvorgang übertragbar, bei dessen Beendigung sich das Flurförderzeug 2 in Ruhe befindet, in diesem Fall beträgt die Endgeschwindigkeit V1 = 0. Der Fall einer positiven Beschleunigung kann in ähnlicher Weise wie der Bremsvorgang betrachtet werden. Anstatt einer zurückgewonnenen Energie ist bei der Geschwindigkeitszunahme eine aufzuwendende Energie zu betrachten.

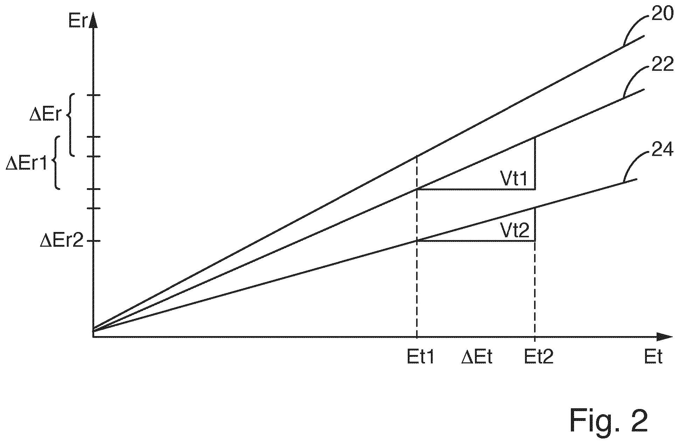

Fig. 2 zeigt eine vereinfachte Grafik, in der ein Zusammenhang zwischen einer angenommenen zurückgewonnenen Energie Et (aufgetragen auf der Abszisse) und einer zurückgewonnenen gemessenen Energie Er (abgetragen auf der Ordinate) gezeigt ist. Die dargestellten Funktionszusammenhänge zeigen eine ideale Kurve 20, eine Kurve 22 bei geringem Verschleißgrad des Rades 4, sowie eine Kurve 24 bei hohem Verschleißgrad des Rades 4. Aus Gründen der Einfachheit der Darstellung sind die Kurven jeweils als Gerade dargestellt. Es muss sich bei den Kurven 20, 22, 24 nicht notwendigerweise um Geraden handeln, es kann jedoch in guter Näherung von einem linearen Zusammenhang ausgegangen werden.

Wie bereits oben erwähnt, soll zu Beginn des Bremsvorgangs das Flurförderzeug 2 eine Anfangsgeschwindigkeit V2 haben. Bei der Anfangsgeschwindigkeit V2 handelt es sich um eine tatsächliche Geschwindigkeit mit der sich das Flurförderzeug 2 auf dem Untergrund 18 bewegt. Diese Geschwindigkeit ist nicht bekannt. Bekannt ist hingegen eine angenommene Anfangsgeschwindigkeit Vt2, die aus einer Anfangsdrehzahl ω2 des Rades 4 gemäß Vt2 = 2 π r ω2 berechnet wird. Auch die Endgeschwindigkeit V1, mit der sich das Flurförderzeug 2 über dem Untergrund 18 bewegt ist nicht bekannt. Es wird hingegen eine angenommene Endgeschwindigkeit Vt1 aus einer Enddrehzahl ω1 des Rades 4 gemäß Vt1 = 2 π r ω1 berechnet. Die tatsächliche Anfangs- und Endgeschwindigkeit V2, V1 könnte beispielsweise mithilfe eines Positionserfassungssystems bestimmt werden, was jedoch im Kontext des Verfahrens zur Ermittlung des Verschleißgrades des Rades 4 nicht erfolgt. In die Berechnung der angenommenen Geschwindigkeiten Vt1, Vt2 fließt als ein Parameter der Radius r des Rades 4 ein. Hier wird der Wert eines Ausgangsradius oder eines Nennradius des Rades 4 beispielhaft verwendet. Dieser Wert entspricht nicht den tatsächlichen Gegebenheiten, da das Rad 4 dem Verschleiß unterliegt. Der tatsächliche Radius des Rades 4 wird also in der Regel geringer sein als der für die Berechnung angenommene Ausgangsradius oder Nennradius des Rades 4.

Während des Bremsvorgangs verändert sich die angenommene Geschwindigkeit Vt. Die angenommene Geschwindigkeitsänderung ΔVt berechnet sich wie folgt ΔVt = Vt2 - Vt1 = 2 π r (ω2 - ω1) = 2 π r (Δω). Dabei ist ω2 die Drehzahl des Rades 4 zu Beginn des Bremsvorgangs und (ω1 die Drehzahl des Rades 4 bei Beendigung des Bremsvorgangs. Δω ist die durch den Bremsvorgang bedingte Drehzahländerung.

Durch Anwendung eines zweiten Funktionszusammenhangs wird aus der Drehzahländerung Δω ein (angenommener) zweiter Beschleunigungskennwert ΔRt berechnet. Beispielsweise wird mittels des zweiten Funktionszusammenhangs aus der Drehzahländerung Δω eine angenommene zurückgewonnene Energie ΔEt als angenommener zweiter Beschleunigungskennwert ΔRt berechnet. Die angenommene zurückgewonnene Energie ΔEt ist eine Differenz zwischen einer angenommenen Anfangsenergie Et2 bei Beginn des Bremsvorgangs und einer angenommenen Endenergie Et1 bei Beendigung des Bremsvorgangs. Die angenommene zurückgewonnene Energie ΔEt kann aus der angenommenen Geschwindigkeitsänderung ΔVt berechnet werden. ΔEt = Et1 - Et2, wobei Et2 die angenommene Energie zu Beginn des Bremsvorgangs und Et1 die angenommene Energie bei Beendigung des Bremsvorgangs ist. Da das Flurförderzeug 2 einen Bremsvorgang durchführt, ist die Energie Et2 zu Beginn des Bremsvorgangs größer als die Energie Et1 bei Beendigung des Bremsvorgangs. Die Energiedifferenz ΔEt ist negativ, was bedeuten, dass Energie zurückgewonnen wird. Die Energiedifferenz ΔEt wird anhand der Drehzahländerung Δω, also der Differenz der Drehzahlen berechnet. ΔEt = Et1 - Et2 = 1/2 m V1^2 - 1/2 m V2^2 = 1/2 m (2 π r (ω1)^2 - 1/2 m (2 π r ω2)^2, wobei Δω = ω1 - ω2. ω2 ist die Drehzahl des Rades 4 zu Beginn des Bremsvorgangs und ω1 ist die Drehzahl des Rades 4 bei Beendigung des Bremsvorgangs.

In diese Berechnung fließt die Masse m des Flurförderzeugs 2 ein. Bei einer Leerfahrt kann beispielsweise die Leermasse des Flurförderzeugs 2 verwendet werden. Aus diesem Grund kann vorgesehen sein, für die Bestimmung des Verschleißgrades des Rades 4 ausschließlich Leerfahrten zu berücksichtigen.

Die angenommene aufgewendete oder zurückgewonnene Energie ΔEt kann ferner durch Integration eines Produktes aus einem zeitabhängigen Wert eines Drehmoments T(t) und einem zeitabhängigen Wert der Drehzahl ω(t) über die Dauer des Beschleunigungsvorgangs bestimmt werden; ΔEt = integral (T(t)*ω(t))dt. Das Integral kann über die Dauer des Beschleunigungsvorgangs integriert werden.

Während des Bremsvorgangs wird außerdem eine (tatsächlich) zurückgewonnene Energie ΔEr gemessen, bezeichnet als gemessene Energie ΔEr. Die gemessene zurückgewonnene Energie ΔEr muss nicht exakt mit einer Differenz zwischen der kinetischen Energie zu Beginn und nach Beendigung des Bremsvorgangs übereinstimmen. Die gemessene zurückgewonnene Energie wird beispielsweise anhand elektrischer Kenngrö-ßen, wie sie im Energierückgewinnungssystem 14 des Flurförderzeugs 2 vorliegen, berechnet und auf diese Weise gemessen. Die elektrischen Kenngrößen sind beispielsweise ein Strom und eine Spannung einer im Fahrantrieb aufgewendeten elektrischen Energie. Wird ein Bremsvorgang betrachtet, können die elektrischen Kenngrößen beispielsweise ein Strom und eine Spannung einer im Energierückgewinnungssystem zurückgewonnenen elektrischen Energie sein. Die (tatsächlich) zurückgewonnene Energie ΔEr kann beispielsweise als Integral bestimmt werden, beispielsweise wir folgt: ΔEr = integral (U(t)*I(t))dt. Die Integration erfolgt insbesondere während des Beschleunigungsvorgangs des Intralogistik-Förderzeugs 2, beispielsweise über eine Zeit, die dem Beschleunigungsvorgang entspricht. I(t) ist der zeitabhängige Wert für den Strom und U(t) ist der zeitabhängige Wert für die Spannung. Beispielsweise kann in diesem Zusammenhang auf Werte zurückgegriffen werden die im Fall eines Bremsvorgangs, an dem als Generator wirkenden Motor des Fahrantriebs abgegriffen werden. Ebenso ist es möglich, zur Bestimmung der gemessenen zurückgewonnenen Energie ΔEr, Strom I(t) und Spannung U(t) der während des Bremsvorgangs von dem Energierückgewinnungssystem 14 zurückgewonnenen Energie zu erfassen. Aufgrund von mechanischen und elektrischen Verlusten wird eine auf diese Weise berechnete gemessene zurückgewonnene Energie ΔEr stets von der Differenz der kinetischen Energien zu Beginn und nach Beendigung des Bremsvorgangs abweichen.

Durch Anwendung eines ersten Funktionszusammenhangs, beispielsweise eines proportionalen Funktionszusammenhangs kann aus der gemessenen zurückgewonnenen Energie ΔEr, die beispielsweise im Energierückgewinnungssystem 14 des Flurförderzeugs 2 erfasst wird, ein erster Beschleunigungskennwert ΔRr bestimmt werden.

In Fig. 2 sind auf der Abszisse die angenommene Anfangsenergie Et2 bei Beginn des Bremsvorgangs und die angenommene Endenergie Et1 bei Beendigung des Bremsvorgangs sowie die angenommene zurückgewonnene Energie ΔEt eingetragen. Abhängig vom Verschleißgrad des Rades 4 werden bei dem Bremsvorgang verschiedene gemessene Energien ΔEr zurückgewonnen. Die Idealkurve ist mit 20 bezeichnet, gemäß dieser Kurve entspricht die gemessene zurückgewonnene Energie ΔEr der angenommenen zurückgewonnenen Energie ΔEt. Die Idealkurve ist eine theoretische Kurve, bei der beispielsweise vorausgesetzt wird, dass keinerlei Reibungs- oder Wirkungsgradverluste auftreten. Eine weitere Voraussetzung ist, dass der tatsächliche Radius des Rades 4 dem für die Berechnung der angenommenen zurückgewonnenen Energien ΔEt zugrunde gelegten Wert entspricht. Es tritt somit keine Abweichungen zwischen der angenommenen Geschwindigkeit Vt und der tatsächlichen Geschwindigkeit V des Flurförderzeugs 2 auf.

In einem realistischen Szenario ist das Rad 4 jedoch zu einem gewissen Grad abgefahren, sodass sein tatsächlicher Radius etwas geringer ist als derjenige Wert, der der Berechnung der angenommenen zurückgewonnenen Energie ΔEt zugrunde gelegt ist. Dies führt dazu, dass die Odometrie des Flurförderzeugs 2 die Geschwindigkeit des Fahrzeugs höher berechnet, als diese tatsächlich ist. Mit zunehmendem Verschleiß des Rades 4 wird dieser Fehler immer größer, d.h. die angenommene Geschwindigkeit Vt weicht immer stärker von der tatsächlichen Geschwindigkeit Vr des Flurförderzeugs 2 ab. Bei einem neuen Rad 4 entspricht beispielsweise eine angenommene Geschwindigkeit von Vt = 20 km/h bis auf unvermeidbare Messungenauigkeiten der tatsächlichen Geschwindigkeit Vr von ebenfalls 20 km/h über dem Untergrund 18. Bei einem halb abgefahrenen Rad 4 beträgt bei einer angenommenen Geschwindigkeit Vt von wiederum 20 km/h die tatsächliche Geschwindigkeit Vr des Flurförderzeugs 2 nur noch beispielsweise 18 km/h auf dem Untergrund 18. Bei einem bis zur Verschleißgrenze abgefahrenem Rad 4 beträgt bei einer angenommenen Geschwindigkeit Vt von 20 km/h die tatsächliche Geschwindigkeit Vr des Flurförderzeugs 2 über dem Untergrund 18 beispielsweise nur noch 16 km/h.

Dieser Effekt führt dazu, dass bei gleicher angenommener zurückgewonnener Energie ΔEt die gemessene zurückgewonnene Energie ΔEr mit zunehmenden Radverschleiß immer geringer wird. Dies wird anhand eines Vergleichs der beiden Kurven 22, 24 und der zugehörigen gemessenen zurückgewonnenen Energien ΔEr1 und ΔEr2 in Fig. 2 deutlich. Die bei einem geringen Radverschleiß (Kurve 22) gemessene zurückgewonnene Energie ΔEr1 ist bereits geringer als der theoretisch erreichbare Maximalwert der zurückgewonnenen Energie ΔEr, da in einem realistischen Szenario Verluste auftreten. Die bei höherem Radverschleiß (Kurve 24) gemessene zurückgewonnene Energie ΔEr2 ist geringer als die bei geringem Radverschleiß (Kurve 22) gemessene zurückgewonnene Energie ΔEr1.

Zur Bestimmung des Verschleißgrades des Rades 4 wird zunächst ein Verschleißgradkennwert Vt bestimmt. Dies erfolgt, indem ein dritter vorbestimmter Funktionszusammenhang auf den ersten Beschleunigungskennwert ΔRr, welcher über den ersten Funktionszusammenhang mit der gemessenen zurückgewonnenen Energie ΔEr korreliert, und den zweiten Beschleunigungskennwert ΔRt, der über den zweiten Funktionszusammenhang mit der angenommenen zurückgewonnenen Energie ΔEt korreliert, angewandt wird. Die folgende Erläuterung wird lediglich aus Gründen der Vereinfachung des Verständnisses anhand der Energien ΔEr, ΔEt vorgenommen. In analoger Weise kann eine Auswertung anhand der Beschleunigungskennwerte ΔR, ΔRt vorgenommen werden.

Beispielsweise kann als dritter Funktionszusammenhang eine Quotientenbildung aus der gemessenen zurückgewonnenen Energie ΔEr und der angenommenen zurückgewonnenen Energie ΔEt vorgenommen werden. In Fig. 2 kann auf diese Weise die Steigung der jeweiligen geraden 22, 24 bestimmt werden. Umgekehrt kann aus der Bestimmung einer entsprechenden Steigerung darauf geschlossen werden, zu welcher der Kurven 22, 24 und zu welchem zugehörigen Verschleißzustand des Rades 4 die erfassten Werte gehören. Bei der bestimmten Steigung handelt es sich somit um einen Verschleißgradkennwert Wt. In Fig. 2 sind Verschleißgradkennwerte Wt1, Wt2 für ein Rad 4 mit geringem Verschleißgrad (Kurve 22) und mit hohem Verschleißgrad (Kurve 24) gezeigt. Die Bestimmung einer zugehörigen Steigung, d. h. eine Quotientenbildung zwischen der gemessenen zurückgewonnene Energie ΔEr und der angenommenen zurückgewonnene Energie ΔEt hat außerdem den Vorteil, dass unabhängig von der Größe der angenommenen zurückgewonnenen Energie ΔEt und der gemessenen zurückgewonnene Energie ΔEr ein Vergleich vorgenommen werden kann. Werden Bremsvorgänge ausgewertet, bei denen die gleiche angenommene zurückgewonnene Energie ΔEt vorliegt, so können auch die gemessenen zurückgewonnenen Energien ΔEr direkt miteinander verglichen werden, beispielsweise die Werte für die Intervalle ΔEr1 und ΔEr2, wie sie in Fig. 2 dargestellt sind.

Um eine Aussage über den Verschleißgrad des Rades 4 treffen zu können, ist es schließlich erforderlich, den Verschleißgradkennwert Wt ins Verhältnis zu setzen zu einem Ausgangs-Verschleißgradkennwert W0. Der Ausgangs-Verschleißgradkennwert W0 kann beispielsweise nach einem Radwechsel an einem neu montierten Rad 4 als Ausgangswert bestimmt werden. Ferner kann ein fest hinterlegter Wert verwendet werden, beispielsweise ein Ausgangs-Verschleißgradkennwert W0, der durch die Steigung der idealen Kurve 20 gegeben ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Flurförderzeug, Intralogistik-Förderzeug
- 3: Logistiksystem
- 4: Rad
- 6: Lastrad
- 8: Hubgerüst
- 10: Lastaufnahmemittel
- 12: Messvorrichtung
- 13: Traktionsbatterie
- 14: Energierückgewinnungssystem
- 16: Verarbeitungseinheit
- 18: Untergrund
- 20: ideale Kurve
- 22: Kurve bei geringem Verschleißgrad
- 24: Kurve bei hohem Verschleißgrad
- 26: Fahrzeugsteuerung
- 28: drahtlose Datenverbindung
- 30: Steuerrechner
- ΔRr: erster Beschleunigungskennwert
- ΔEr: gemessene aufgewendete oder zurückgewonnene Energie
- ΔRt: zweiter Beschleunigungskennwert
- ΔEt: angenommene aufgewendete oder zurückgewonnene Energie
- Δω: Drehzahländerung
- m: Masse des Flurförderzeugs oder Intralogistik-Förderzeugs
- Wt: Verschleißgradkennwert
- W0: Ausgangs-Verschleißgradkennwert

## Patentansprüche

1. Verfahren zur Ermittlung eines Verschleißgrades eines Rades (4) eines Intralogistik-Förderzeugs (2), wobei das Intralogistik-Förderzeug (2) dazu ausgebildet und eingerichtet ist, eine Drehzahl (ω) des Rades (4) zu messen und eine von dem Intralogistik-Förderzeug (2) aufgewendete oder zurückgewonnene Energie (ΔEr) zu messen, wobei das Verfahren die folgenden Schritte aufweist:
a) Erfassen einer während eines Beschleunigungsvorgangs aufgewendeten oder zurückgewonnenen gemessenen Energie (ΔEr),
b) Bestimmen eines ersten Beschleunigungskennwertes (ΔRr) durch Anwenden eines vorbestimmten ersten Funktionszusammenhangs auf die bei dem Beschleunigungsvorgang gemessene aufgewendete oder zurückgewonnene Energie (ΔEr),
c) Erfassen einer durch den Beschleunigungsvorgang bedingten Drehzahländerung (Δω) der Drehzahl (ω) des Rades (4),
d) Bestimmen eines zweiten Beschleunigungskennwertes (ΔRt) durch Anwenden eines zweiten vorbestimmten Funktionszusammenhangs auf die Drehzahländerung (Δω),
e) Bestimmen eines Verschleißgradkennwertes (Wt) durch Anwenden eines dritten vorbestimmten Funktionszusammenhangs auf den ersten Beschleunigungskennwert (ΔRr) und den zweiten Beschleunigungskennwert (ΔRt),
f) Bestimmen eines Verschleißgrades des Rades (4) durch Vergleichen des Verschleißgradkennwertes (Wt) mit einem Ausgangs-Verschleißgradkennwert (W0).

2. Verfahren nach Anspruch 1, bei dem der Ausgangs-Verschleißgradkennwert (W0) bestimmt wird, indem die Schritte a) bis f) für eine Vielzahl von Beschleunigungsvorgängen durchgeführt werden und der Ausgangs-Verschleißgradkennwert (W0) aus den für die Vielzahl von Beschleunigungsvorgängen ermittelten Verschleißgradkennwerten (Wt) bestimmt wird, wobei der Ausgangs-Verschleißgradkennwert (W0) insbesondere ein statistisches Mittel der für die Vielzahl von Beschleunigungsvorgängen ermittelten Verschleißgradkennwerte (Wt) ist und wobei die Vielzahl von Beschleunigungsvorgängen insbesondere im Anschluss an einen Wechsel des Rades (4) durchgeführt werden.

3. Verfahren nach Anspruch 1 oder 2, bei dem die während des Beschleunigungsvorgangs des Intralogistik-Förderzeugs (2) aufgewendete oder zurückgewonnene gemessene Energie (ΔEr) auf der Grundlage elektrischer Kenngrößen des Intralogistik-Förderzeugs (2) erfasst wird, insbesondere auf der Grundlage elektrischer Kenngrößen eines Fahrantriebs und/oder eines Energierückgewinnungssystems des Intralogistik-Förderzeugs (2), wobei die elektrischen Kenngrößen ferner insbesondere ein Strom und eine Spannung einer im Fahrantrieb oder im Energierückgewinnungssystem aufgewendeten oder zurückgewonnenen elektrischen Energie als gemessene Energie (ΔEr) sind, wobei ferner insbesondere die während des Beschleunigungsvorgangs des Intralogistik-Förderzeugs (2) aufgewendete oder zurückgewonnene gemessene Energie (ΔEr) durch Integration eines Produktes aus einem zeitabhängigen Wert für den Strom und einem zeitabhängigen Wert für die Spannung über die Dauer des Beschleunigungsvorgangs bestimmt wird.

4. Verfahren nach einem der vorhergehenden Ansprüche, bei dem
i) der erste Funktionszusammenhang in Schritt b) ein proportionaler Funktionszusammenhang ist,
und/oder
ii) gemäß dem zweiten Funktionszusammenhang in Schritt d) eine Proportionalität zwischen der Drehzahländerung (Δω) und einer angenommenen aufgewendeten oder zurückgewonnenen Energie (ΔEt) als zweiten Beschleunigungskennwert (ΔRt) hergestellt wird,
und/oder
iii) der zweite Funktionszusammenhang in Schritt d) einen vorbestimmten Radius, insbesondere einen Nennradius (r), des Rades (4) berücksichtigt, und ferner insbesondere durch Anwendung des zweiten Funktionszusammenhangs auf die Drehzahländerung (Δω) als Zwischenergebnis eine angenommene Geschwindigkeitsänderung (ΔVt) des Intralogistik-Förderzeugs (2) berechnet wird, insbesondere unter Verwendung des Nennradius (r) des Rades (4), und ferner aus der angenommenen Geschwindigkeitsänderung (ΔVt) unter Verwendung einer angenommenen Masse (m) des Intralogistik-Förderzeugs (2) die angenommene aufgewendete oder zurückgewonnene Energie (ΔEt) berechnet wird, wobei ferner insbesondere die angenommene Masse (m) des Intralogistik-Förderzeugs (2) die Leermasse des Intralogistik-Förderzeugs (2) ist,
und/oder
iv) der zweite Funktionszusammenhang in Schritt d) ein während des Beschleunigungsvorgangs in einem Fahrantrieb des Intralogistik-Förderzeugs (2) anliegendes Drehmoment berücksichtigt, wobei insbesondere eine angenommene aufgewendete oder zurückgewonnene Energie (ΔEt) als zweiter Beschleunigungskennwert (ΔRt) durch Integration eines Produktes aus einem zeitabhängigen Wert des Drehmoments und einem zeitabhängigen Wert der Drehzahl (ω) über die Dauer des Beschleunigungsvorgangs bestimmt wird
und/oder
v) gemäß dem dritten Funktionszusammenhang in Schritt e) ein Quotient aus dem ersten Beschleunigungskennwert (ΔRr) und dem zweiten Beschleunigungskennwert (ΔRt) berechnet wird oder eine Differenz zwischen dem zweiten Beschleunigungskennwert (ΔRt) und dem ersten Beschleunigungskennwert (ΔRr) berechnet wird.

5. Verfahren nach einem der vorhergehenden Ansprüche, bei dem die Schritte a) bis f) für eine Vielzahl von zeitlich nacheinander stattfindenden Beschleunigungsvorgängen durchgeführt werden und so ein zeitlicher Verlauf des Verschleißgradkennwerts (Wt) bestimmt wird.

6. Verfahren nach einem der vorhergehenden Ansprüche, bei dem eine Wartungsmitteilung ausgegeben wird, wenn der Verschleißgradkennwert (Wt) einen vorbestimmten Grenzwert überschreitet.

7. Verfahren nach einem der vorhergehenden Ansprüche, bei dem der Beschleunigungsvorgang ein Vorgang mit negativer Beschleunigung ist und insbesondere mit einem Bremsvorgang zeitlich überlappt oder dem Bremsvorgang entspricht oder der Beschleunigungsvorgang ein Vorgang mit positiver Beschleunigung ist und insbesondere mit einem Geschwindigkeitszunahmevorgang zeitlich überlappt oder dem Geschwindigkeitszunahmevorgang entspricht, wobei insbesondere ausschließlich Beschleunigungsvorgänge bei der Bestimmung des Verschleißgrades berücksichtigt werden, bei denen die Beschleunigung oberhalb eines vorbestimmten Grenzwertes liegt und/oder ausschließlich Bremsvorgänge bei der Bestimmung des Verschleißgrades berücksichtigt werden, die zum Stillstand des Intralogistik-Förderzeugs (2) führen oder ausschließlich Geschwindigkeitszunahmevorgänge bei der Bestimmung des Verschleißgrades berücksichtigt werden, die zu einer Fahrt des Intralogistik-Förderzeugs (2) mit einer bekannten, insbesondere vorgegebenen oder vorgebbaren, Endgeschwindigkeit führen.

8. Verfahren nach einem der vorhergehenden Ansprüche, bei dem eine Leerfahrt des Intralogistik-Förderzeugs (2) erkannt und der Beschleunigungsvorgang während einer Leerfahrt durchgeführt wird.

9. Logistiksystem (3), aufweisend eine Verarbeitungseinheit (16) und zumindest ein Intralogistik-Förderzeug (2) mit einem Rad (4), wobei das Intralogistik-Förderzeug (2) dazu ausgebildet und eingerichtet ist, eine Drehzahl (ω) des Rades (4) zu messen und eine aufgewendete oder zurückgewonnene Energie (ΔEr) zu messen, wobei die Verarbeitungseinheit (16) dazu ausgebildet und eingerichtet ist:
a) eine während eines Beschleunigungsvorgangs des Intralogistik-Förderzeugs (2) aufgewendete oder zurückgewonnene gemessene Energie (ΔEr) zu erfassen,
b) einen ersten Beschleunigungskennwert (ΔRr) durch Anwendung eines vorbestimmten ersten Funktionszusammenhangs auf die bei dem Beschleunigungsvorgang gemessene aufgewendete oder zurückgewonnene Energie (ΔEr) zu bestimmen,
c) eine durch den Beschleunigungsvorgang bedingt Drehzahländerung (Δω) der Drehzahl (ω) des Rades (4) zu erfassen,
d) einen zweiten Beschleunigungskennwert (ΔRt) durch Anwendung eines zweiten vorbestimmten Funktionszusammenhangs auf die Drehzahländerung (Δω) zu bestimmen,
e) einen Verschleißgradkennwert (Wt) durch Anwendung eines dritten vorbestimmten Funktionszusammenhangs auf den ersten Beschleunigungskennwert (ΔRr) und den zweiten Beschleunigungskennwert (ΔRt) zu bestimmen,
f) einen Verschleißgrad des Rades (4) durch Vergleichen des Verschleißgradkennwertes (Wt) mit einem Ausgangs-Verschleißgradkennwert (W0) zu bestimmen.

10. Logistiksystem (3) nach Anspruch 9, wobei die Verarbeitungseinheit (16) dazu ausgebildet und eingerichtet ist, die während des Beschleunigungsvorgangs des Intralogistik-Förderzeugs (2) aufgewendete oder zurückgewonnene gemessene Energie (ΔEr) auf der Grundlage elektrischer Kenngrößen des Intralogistik-Förderzeugs (2) zu erfassen, insbesondere auf der Grundlage elektrischer Kenngrößen eines Fahrantriebs und/oder eines Energierückgewinnungssystems (14) des Intralogistik-Förderzeugs (2), wobei die elektrischen Kenngrößen ferner insbesondere ein Strom und eine Spannung einer im Fahrantrieb und/oder im Energierückgewinnungssystem aufgewendeten oder zurückgewonnenen elektrischen Energie als gemessene Energie (ΔEr) sind, wobei ferner insbesondere die Verarbeitungseinheit (16) dazu ausgebildet und eingerichtet ist, die während des Beschleunigungsvorgangs des Intralogistik-Förderzeugs (2) aufgewendete oder zurückgewonnene gemessene Energie (ΔEr) durch Integration eines Produktes aus einem zeitabhängigen Wert für den Strom und einem zeitabhängigen Wert für die Spannung über die Dauer des Beschleunigungsvorgangs zu bestimmen.

11. Logistiksystem (3) nach Anspruch 9 oder 10, wobei
i) der in der Verarbeitungseinheit (16) hinterlegte erste Funktionszusammenhang gemäß Merkmal b) ein proportionaler Funktionszusammenhang ist,
und/oder
ii) der in der Verarbeitungseinheit (16) hinterlegte zweite Funktionszusammenhang gemäß Merkmal d) eine Proportionalität zwischen der Drehzahländerung (Δω) und einer angenommenen zurückgewonnenen Energie (ΔEt) als zweiten Beschleunigungskennwert (ΔRt) herstellt,
und/oder
iii) der in der Verarbeitungseinheit (16) hinterlegte zweite Funktionszusammenhang gemäß Merkmal d) einen vorbestimmten Radius, insbesondere einen Nennradius (r), des Rades (4) berücksichtigt, und ferner insbesondere die Verarbeitungseinheit (16) dazu ausgebildet und eingerichtet ist, durch Anwendung des zweiten Funktionszusammenhangs auf die Drehzahländerung (Δω) als Zwischenergebnis eine angenommene Geschwindigkeitsänderung (ΔVt) des Intralogistik-Förderzeugs (2) zu berechnen, insbesondere unter Verwendung des Nennradius (r) des Rades (4), und wobei die Verarbeitungseinheit (16) dazu ausgebildet und eingerichtet ist, ferner aus der angenommenen Geschwindigkeitsänderung (ΔVt) unter Verwendung einer angenommenen Masse (m) des Intralogistik-Förderzeugs (2) die angenommene aufgewendete oder zurückgewonnene Energie (ΔEt) zu berechnen, wobei ferner insbesondere die angenommene Masse (m) des Intralogistik-Förderzeugs (2) die Leermasse des Intralogistik-Förderzeugs (2) ist,
und/oder
iv) der in der Verarbeitungseinheit (16) hinterlegte zweite Funktionszusammenhang ferner ein während des Beschleunigungsvorgangs in einem Fahrantrieb des Intralogistik-Förderzeugs (2) anliegendes Drehmoment berücksichtigt, wobei insbesondere die Verarbeitungseinheit (16) dazu ausgebildet und eingerichtet ist eine angenommene aufgewendete oder zurückgewonnene Energie (ΔEt) als zweiten Beschleunigungskennwert (ΔRt) durch Integration eines Produktes aus einem zeitabhängigen Wert des Drehmoments und einem zeitabhängigen Wert der Drehzahl (ω) über die Dauer des Beschleunigungsvorgangs zu bestimmen,
und/oder
v) gemäß dem der in der Verarbeitungseinheit (16) hinterlegten dritten Funktionszusammenhang die Verarbeitungseinheit (16) dazu ausgebildet und eingerichtet ist, einen Quotienten aus dem ersten Beschleunigungskennwert (ΔRr) und dem zweiten Beschleunigungskennwert (ΔRt) zu berechnen oder eine Differenz zwischen dem zweiten Beschleunigungskennwert (ΔRt) und dem ersten Beschleunigungskennwert (ΔRr) zu berechnen.

12. Logistiksystem (3) nach einem der Ansprüche 9 bis 11, wobei die Verarbeitungseinheit (16) dazu ausgebildet und eingerichtet ist, die Merkmale a) bis f) für eine Vielzahl von zeitlich nacheinander stattfindenden Beschleunigungsvorgängen durchzuführen und so einen zeitlichen Verlauf des Verschleißgradkennwerts (Wt) zu bestimmen.

13. Logistiksystem (3) nach einem der Ansprüche 9 bis 12, wobei die Verarbeitungseinheit (16) dazu ausgebildet und eingerichtet ist, eine Wartungsmitteilung auszugeben, wenn der Verschleißgradkennwert (Wt) einen vorbestimmten Grenzwert überschreitet.

14. Logistiksystem (3) nach einem der Ansprüche 9 bis 13, wobei die Verarbeitungseinheit (16) dazu ausgebildet und eingerichtet ist, Beschleunigungsvorgänge mit negativer Beschleunigung und/oder Beschleunigungsvorgänge mit positiver Beschleunigung zu berücksichtigen, wobei die Beschleunigungsvorgänge mit negativer Beschleunigung mit einem Bremsvorgang zeitlich überlappen oder dem Bremsvorgang entsprechen, oder wobei die Beschleunigungsvorgänge mit positiver Beschleunigung mit einem Geschwindigkeitszunahmevorgang zeitlich überlappen oder dem Geschwindigkeitszunahmevorgang entsprechen, wobei die Verarbeitungseinheit (16) insbesondere dazu ausgebildet und eingerichtet ist, ausschließlich Beschleunigungsvorgänge bei der Bestimmung des Verschleißgrades (Wt) zu berücksichtigen, bei denen die Beschleunigung oberhalb eines vorbestimmten Grenzwertes liegt und/oder ausschließlich Bremsvorgänge bei der Bestimmung des Verschleißgrades (Wt) zu berücksichtigen, die zum Stillstand des Intralogistik-Förderzeugs (2) führen oder ausschließlich Geschwindigkeitszunahmevorgänge bei der Bestimmung des Verschleißgrades (Wt) zu berücksichtigen, die zu einer Fahrt des Intralogistik-Förderzeugs (2) mit einer bekannten, insbesondere vorgegebenen oder vorgebbaren, Endgeschwindigkeit führen.

15. Logistiksystem (3) nach einem der Ansprüche 9 bis 14, wobei die Verarbeitungseinheit (16), insbesondere als ein Teil der Fahrzeugsteuerung, in dem Intralogistik-Förderzeug (2) vorhanden ist, oder die Verarbeitungseinheit (16) außerhalb des Intralogistik-Förderzeugs (2), insbesondere in einem Steuerrechner (30) einer Logistikeinrichtung, in der das Logistiksystem (3) implementiert ist, vorhanden ist, wobei das Intralogistik-Förderzeug (2) eine Kommunikationsvorrichtung aufweist, welche dazu ausgebildet und eingerichtet ist, Daten betreffend die Drehzahl (ω) des Rades (4) und Daten betreffend die während des Beschleunigungsvorgangs aufgewendete oder zurückgewonnene gemessene Energie (ΔEr) an die Verarbeitungseinheit (16) zu überm itteln.
